# EUROPEAN PATENT APPLICATION

(11) **EP 4 579 700 A1**
(43) Date of publication of application: **02.07.2025**
(21) Application number: 24219129.4
(22) Date of filing: 11.12.2024
(51) Int. Cl.: H01G 4/008, H01G 4/232, H01G 4/30, H01G 4/012

(54) **MULTILAYER ELECTRONIC COMPONENT**

(30) Priority: 29.12.2023 KR 20230196456
(71) Applicant: Samsung Electro-Mechanics Co., Ltd., Gyeonggi-do (KR)
(72) Inventor: Kim, Jin Hwan, Suwon-si, Gyeonggi-do (KR); Jun, Ho In, Suwon-si, Gyeonggi-do (KR); Kim, Kyo Sik, Suwon-si, Gyeonggi-do (KR); Baek, Seung Hun, Suwon-si, Gyeonggi-do (KR); Lee, Chul Seung, Suwon-si, Gyeonggi-do (KR)
(74) Representative: Grünecker Patent- und Rechtsanwälte PartG mbB

(57) **Abstract**

A multilayer electronic component includes a body including a dielectric layer and internal electrodes disposed alternately with the dielectric layer; solder layers disposed on ends of the internal electrodes and each including a Zn-based solder; and external electrodes disposed on the solder layer, wherein the solder layer includes a first alloy layer disposed on an interfacial surface with the internal electrode and including Zn-Ni alloy, and a second alloy layer disposed on an interfacial surface with the external electrode and including Zn-Cu alloy.

## Description

### CROSS-REFERENCE TO RELATED APPLICATION(S)

The application claims the benefit of priority to Korean Patent Application No. 10-2023-0196456 filed on December 29, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic component (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, and charging or discharging electricity therein or therefrom.

Such a multilayer ceramic capacitor may be used as a component of various electronic devices, since a multilayer ceramic capacitor may have a small size and high capacitance and may be easily mounted.

As electronic devices have been designed to have a reduced size and high performance, a multilayer ceramic capacitor has also been designed to have a reduced size and high capacitance, and following this trend, the importance of ensuring high reliability of a multilayer ceramic capacitor has increased.

Generally, as for a multilayer ceramic capacitor, a body may be formed by laminating and pressing ceramic green sheets on which internal electrode patterns are printed, and sintering the sheets. In the sintering process, ends of the internal electrodes may be exposed while being disposed in the body due to a difference in shrinkage behaviors between the internal electrodes and the dielectric layer. In this case, connectivity between the internal electrodes and the external electrodes may deteriorate.

### SUMMARY

An embodiment of the present disclosure is to provide a multilayer electronic component having improved reliability.

An embodiment of the present disclosure is to improve connectivity between an internal electrode and an external electrode.

According to an embodiment of the present disclosure, a multilayer electronic component includes a body including a dielectric layer and internal electrodes disposed alternately with the dielectric layer; solder layers disposed on ends of the internal electrodes, each including a Zn-based solder; and external electrodes disposed on the solder layer, wherein the solder layer includes a first alloy layer disposed on an interfacial surface with the internal electrode and including Zn-Ni alloy, and a second alloy layer disposed on an interfacial surface with the external electrode and including Zn-Cu alloy.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is a cross-sectional diagram taken along line I-I' in FIG. 1;
FIG. 3 is a cross-sectional diagram taken along line II-II' in FIG. 1;
FIG. 4 is an exploded diagram illustrating a body according to an embodiment of the present disclosure;
FIG. 5 is a diagram illustrating a portion of a body illustrated in FIG. 2; and
FIG. 6 is an enlarged diagram illustrating region K1 in FIG. 2.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope in the embodiment are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### Multilayer Electronic Component

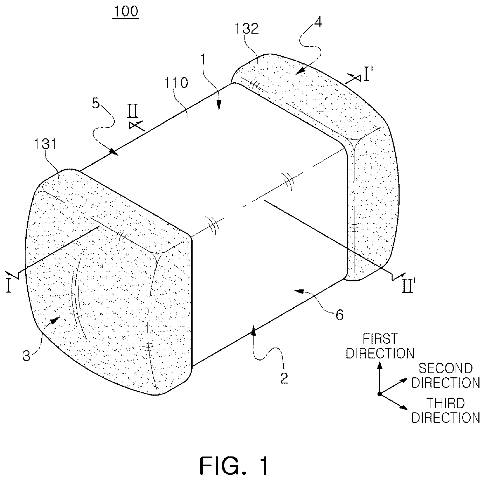

FIG. 1 is a perspective diagram illustrating a multilayer electronic component according to an embodiment.

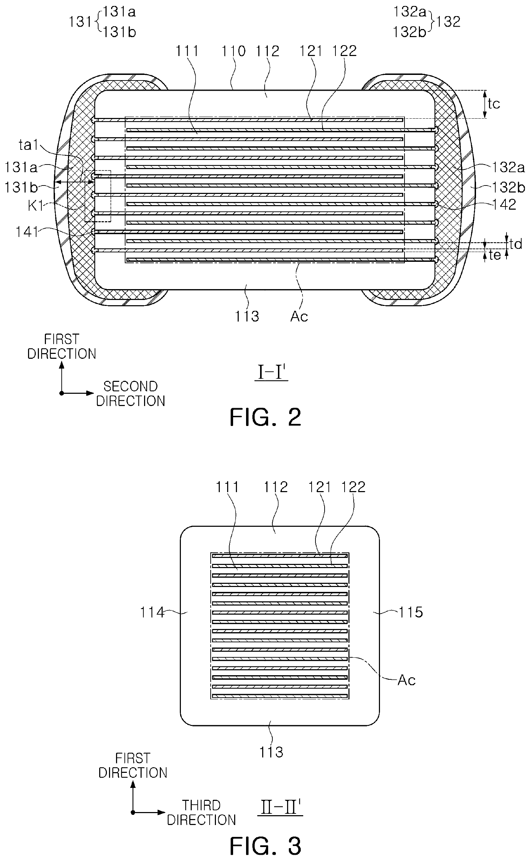

FIG. 2 is a cross-sectional diagram taken along line I-I' in FIG. 1.

FIG. 3 is a cross-sectional diagram taken along line II-II' in FIG. 1.

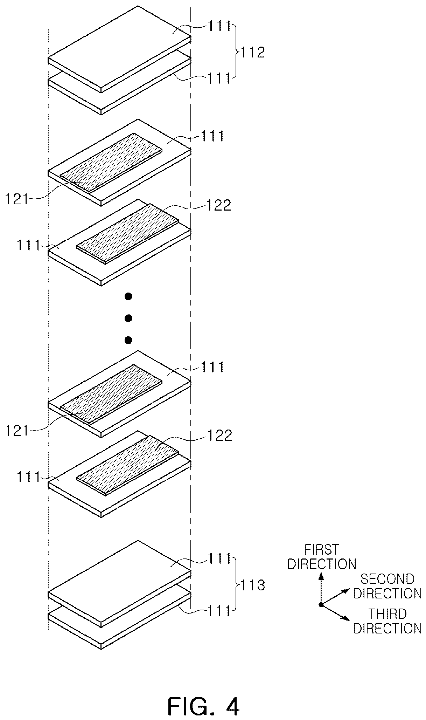

FIG. 4 is an exploded diagram illustrating a body according to an embodiment.

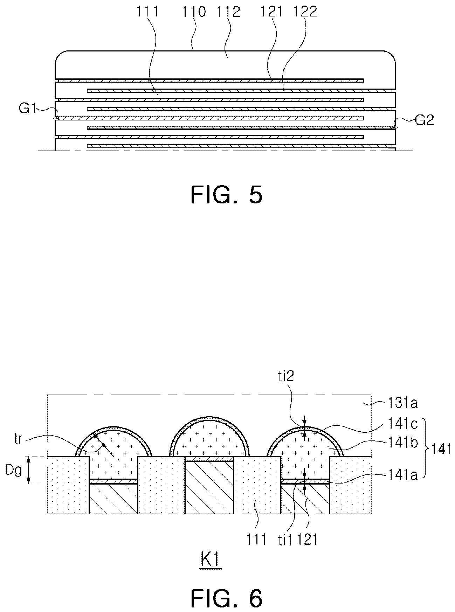

FIG. 5 is a diagram illustrating a portion of a body illustrated in FIG. 2.

FIG. 6 is an enlarged diagram illustrating region K1 in FIG. 2.

Hereinafter, a multilayer electronic component 100 according to an embodiment will be described in greater detail with reference to FIGS. 1 to 6. A multilayer ceramic capacitor will be described as an example of a multilayer electronic component (hereinafter, MLCC), but an embodiment thereof is not limited thereto, and the multilayer ceramic capacitor may be applied to various multilayer electronic components, such as an inductor, a piezoelectric element, a varistor, or a thermistor.

The multilayer electronic component 100 may include a body 110 including a dielectric layer 111 and internal electrodes 121 and 122 disposed alternately with the dielectric layer; solder layers 141 and 142 respectively disposed on ends of the internal electrode 121 and 122 and including a Zn-based solder; and external electrodes 131 and 132 disposed on respectively the solder layers 141 and 142, wherein the solder layers include a first alloy layer 141a disposed on an interfacial surface with the internal electrode and including Zn-Ni alloy, and a second alloy layer 141c disposed on an interfacial surface with the external electrode and including Zn-Cu alloy.

Connectivity between the external electrode and the internal electrode may greatly affect reliability of the multilayer electronic component. When contact between the internal electrode and the external electrode is degraded, electrical connectivity between the internal electrode and the external electrode may degrade, which may increase equivalent series resistance (ESR), and moisture resistance reliability may degrade.

According to an embodiment, by disposing the solder layers 141 and 142 including Zn-based solder on ends of the internal electrodes 121 and 122, and including alloy layers 141a and 141c disposed on an interfacial surface of the solder layer with the internal electrode and an interfacial surface with the external electrode, electrical connectivity between the internal electrodes 121 and 122 and the external electrodes 131 and 132 may be improved.

Hereinafter, each component included in the multilayer electronic component 100 according to an embodiment will be described.

In the body 110, the dielectric layers 111 and the internal electrodes 121 and 122 may be alternately laminated.

The shape of the body 110 may not be limited to any particular shape, but as illustrated, the body 110 may have a hexahedral shape or a shape similar to a hexahedral shape. Due to reduction of ceramic powder included in the body 110 during a firing process or polishing of corners, the body 110 may not have an exactly hexahedral shape formed by linear lines but may have a substantially hexahedral shape.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first and second surfaces 1 and 2 and the third and fourth surfaces 3 and 4 and opposing each other in the third direction.

As the margin region in which the internal electrodes 121 and 122 are not disposed overlaps the dielectric layer 111, a step difference may be formed by a thickness of internal electrodes 121 and 122, and a corner connecting the first surface to the third to fifth surface and/or a corner connecting the second surface to the third to fifth surface may have a shape shrinking toward a center in the first direction of the body 110 when viewed from the first surface or the second surface. Alternatively, due to shrinkage behavior during a process of sintering the body, the corners connecting the first surface 1 to the third to sixth surfaces 3, 4, 5, and 6 and/or the corners connecting the second surface 2 to the third to sixth surfaces 3, 4, 5, and 6 may have a shape shrinking toward a center in the first direction of the body 110 when viewed from the first surface or the second surface. Alternatively, to prevent chipping defects, the corners connecting the surfaces of the body 110 may be rounded by performing a specific process. Accordingly, the corners connecting the first surface to the third to sixth surface and/or the corners connecting the second surface to the third to sixth surface may have a rounded shape.

To prevent the step difference caused by the internal electrodes 121 and 122, when margin portions 114 and 115 are formed by cutting the internal electrodes to be exposed to the fifth and sixth surfaces 5 and 6 of the body after lamination, and laminating a single dielectric layer or two or more dielectric layers on both side surfaces of the capacitance formation portion Ac in the third direction (width direction), the portion connecting the first surface to the fifth and sixth surfaces and the portion connecting the second surface to the fifth and sixth surfaces may not shrink.

The plurality of dielectric layers 111 forming the body 110 may be in a fired state, and boundaries between adjacent dielectric layers 111 may be integrated with each other such that boundaries therebetween may not be distinct without using a scanning electron microscope (SEM). It may not be necessary to specifically limit the number of laminates of the dielectric layer, and the number of laminates may be determined by considering the size of the multilayer electronic component. For example, the body may be formed by laminating 400 or more layers of the dielectric layer.

The dielectric layer 111 may be formed by preparing ceramic slurry including ceramic powder, an organic solvent, an additive, and a binder, preparing a ceramic green sheet by applying the slurry on a carrier film and drying the slurry, and firing the ceramic green sheet. The ceramic powder is not limited to any particular example as long as sufficient electrostatic capacitance may be obtained. For example, powder based on barium titanate (BaTiO₃) may be used as ceramic powder. For more specific example, the ceramic powder may be one or more of BaTiO₃, (Ba₁₋ₓCaₓ) TiO₃ (0<x<1), Ba(Ti_{1-y}Ca_{y})O3 (0<y<1), (Ba₁₋ₓCaₓ) (Ti_{1-y}Zr_{y})O₃ (0<x<1, 0<y<1) and Ba(Ti_{1-y}Zr_{y})O₃ (0<y<1).

The average thickness td of the dielectric layer 111 may not be limited to any particular example, and may be, for example, 0.01 um to 10 um. Also, the average thickness td of the dielectric layer 111 may be arbitrarily determined depending on the desired properties or purpose. For example, in the case of small-sized IT electronic components, to implement miniaturization and high capacitance, the average thickness td of at least one of the plurality of dielectric layers 111 may be 0.4 um or less.

The average thickness td may indicate the sizes in the first direction of the dielectric layer 111 disposed between the internal electrodes 121 and 122. The average thickness td of the dielectric layer 111 may be measured by scanning the cross-sections of the body 110 in the first and second directions using a scanning electron microscope (SEM) at 10,000 magnification. More specifically, the average thickness of the dielectric layer 111 may be measured by measuring the thickness at multiple points of the dielectric layer 111, for example, 30 points at equal distances in the second direction. The 30 points at equal distance may be designated in the capacitance forming portion. Meanwhile, by measuring the average value on 10 dielectric layers 111, and the average thickness of the dielectric layer 111 may be further generalized.

The body 110 may include a capacitance formation portion Ac forming capacitance including the first internal electrode 121 and the second internal electrode 122 disposed in the body 110 and opposing each other with the dielectric layer 111 therebetween, and cover portions 112 and 113 formed in upper and lower portions of the capacitance formation portion Ac in the first direction.

Also, the capacitance formation portion Ac may contribute to forming capacitance of the capacitor, and may be formed by repeatedly laminating the plurality of first and second internal electrodes 121 and 122 with the dielectric layer 111 interposed therebetween.

The cover portions 112 and 113 may include an upper cover portion 112 disposed on an upper portion in the first direction of the capacitance formation portion Ac and a lower cover portion 113 disposed on a lower portion in the first direction of the capacitance formation portion Ac.

The upper cover portions 112 and the lower cover portions 113 may be formed by laminating a single dielectric layer or two or more dielectric layers on the upper and lower surfaces of the capacitance formation portion Ac in the thickness direction, respectively, and may prevent damages to the internal electrode due to physical or chemical stress.

The upper cover portions 112 and the lower cover portions 113 may not include an internal electrode and may include the same material as that of the dielectric layer 111.

That is, the upper cover portions 112 and the lower cover portions 113 may include a ceramic material, for example, a barium titanate (BaTiO₃) ceramic material.

The thickness of the cover portions 112 and 113 may not be limited to any particular example. For example, a thickness tc of the cover portions 112 and 113 may be 30 um or less.

The average thickness tc of the cover portions 112 and 113 may indicate the size in the first direction, and may be an average value of the sizes in the first direction of the cover portions 112 and 113 measured at five points at an equal distance in the upper portion or the lower portion of the capacitance formation portion Ac.

Also, the margin portions 114 and 115 may be disposed on side surfaces of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in the width direction.

The margin portions 114 and 115 may indicate a region between both ends of the first and second internal electrodes 121 and 122 and the boundary surface of the body 110 in a cross-section in the width-thickness (W-T) direction of the body 110 as illustrated in FIG. 3.

The margin portions 114 and 115 may prevent damages to the internal electrode due to physical or chemical stress.

The margin portions 114 and 115 may be formed by forming an internal electrode by applying a conductive paste on the ceramic green sheet other than the region in which the margin portion is to be formed.

Also, to prevent a step difference caused by the internal electrodes 121 and 122, after laminating, the margin portion 114 and 115 may be formed by cutting the internal electrode to be exposed to the fifth and sixth surfaces 5 and 6 of the body, and laminating a single dielectric layer or two or more dielectric layers on both side surfaces of the capacitance forming portion Ac in the third direction (width direction).

Widths of the margin portions 114 and 115 may not be limited to any particular example. To easily implement miniaturization and high capacitance of the multilayer electronic component, the average width of the margin portions 114 and 115 may be 15 um or less.

The average width of margin portions 114 and 115 may refer to the average size in the third direction of the region in which the internal electrode is spaced apart from the fifth surface and the average size in the third direction of the region in which the internal electrode is spaced apart from the sixth surface, and may be the average value of the sizes in the third direction of the margin portions 114 and 115 measured at five points at an equal distance on the side surface of the capacitance forming portion Ac.

Accordingly, in an embodiment, each of the average sizes in the third direction of the region spaced apart from the fifth and sixth surfaces of the internal electrodes 121 and 122 may be 15 um or less.

When a magnetic material is applied to the body 110 instead of a dielectric material, the multilayer electronic component may function as an inductor. The magnetic material may be, for example, ferrite and/or metal magnetic particles. When the multilayer electronic component functions as an inductor, the internal electrode may be implemented as a coil-shaped conductor.

Also, when a piezoelectric material is applied to the body 110 instead of a dielectric material, the multilayer electronic component may function as a piezoelectric element. The piezoelectric material may be, for example, lead zirconate titanate (PZT).

Also, when a ZnO-based material or a SiC-based material is applied to the body 110 instead of a dielectric material, the multilayer electronic component may function as a varistor, and when a spinel-based material is applied to the body 110 instead of a dielectric material, the multilayer electronic component may function as a thermistor.

That is, by appropriately changing a material or structure of the body 110, the multilayer electronic component 100 according to an embodiment may function as a multilayer ceramic capacitor and also an inductor, a piezoelectric element, a varistor, or a thermistor.

The internal electrodes 121 and 122 may be disposed alternately with the dielectric layer 111, and for example, the first internal electrode 121 and the second internal electrode 122, a pair of electrodes having different polarities, may be disposed to oppose each other with the dielectric layer 111 interposed therebetween. The first internal electrode 121 and the second internal electrode 122 may be electrically separated from each other by the dielectric layer 111 disposed therebetween. In this case, the internal electrodes 121 and 122 may be disposed alternately with the dielectric layer 111 in the first direction.

The first internal electrode 121 may be spaced apart from the fourth surface 4 and may extend toward the third surface 3. The second internal electrode 122 may be spaced apart from the third surface 3 and may extend toward the fourth surface 4. The first internal electrode 121 may be electrically connected to the first external electrode 131 on the third surface 3 side, and the second internal electrode 122 may be electrically connected to the second external electrode 132 on the fourth surface 4 side.

A conductive metal included in the internal electrodes 121 and 122 may be one or more of Ni, Cu, Pd, Ag, Au, Pt, In, Sn, Al, Ti and alloys thereof.

In an embodiment, the internal electrode 121 and 122 may include Ni. Since the internal electrode includes Ni, a Zn-Ni alloy may be easily formed on the interfacial surface with the solder layers 141 and 142. Also, the internal electrode 121 and 122 may include Ni as a main component, and here, the configuration in which the internal electrode 121 and 122 includes Ni as a main component may indicate that an area ratio occupied by Ni to the total area of the internal electrode may be 90% or more when the cross-section of the internal electrode is analyzed by SEM-EDS.

A method of forming the internal electrodes 121 and 122 is not limited to any particular example. For example, the internal electrodes 121 and 122 may be formed by applying a conductive paste for internal electrodes including a conductive metal on a ceramic green sheet and performing a firing process. As the method of applying the conductive paste for internal electrodes, a screen-printing method or a gravure printing method may be used, but an embodiment thereof is not limited thereto.

The average thickness te of the internal electrodes 121 and 122 may not be limited to any particular example, and may be, for example, 0.01 um to 3 um. Also, the average thickness te of the internal electrodes 121 and 122 may be arbitrarily determined according to desired properties or purposes, and for example, in the case of small-sized IT electronic components, to implement miniaturization and high capacitance, the average thickness te of at least one of the plurality of internal electrodes 121 and 122 may be 0.4 um or less.

The average thickness te of the internal electrodes 121 and 122 may be measured by scanning the cross-sections in the first and second directions of the body 110 using a scanning electron microscope (SEM) at 10,000 magnification. More specifically, the average thickness of the internal electrodes 121 and 122 may be measured by measuring the thickness at multiple points of one of the internal electrodes 121 and 122, for example, 30 points at an equal distance in the second direction. The 30 points at equal distance may be designated in the capacitance forming portion. Also, by measuring the average value on 10 internal electrodes 121 and 122, and the average thickness of the average thickness of the internal electrodes 121 and 122 may be further generalized.

The external electrodes 131 and 132 may be disposed in the body 110 and may be connected to the internal electrodes 121 and 122.

As illustrated in FIG. 2, the first and second external electrodes 131 and 132 disposed in the third and fourth surfaces 3 and 4 of the body 110, respectively, and connected to the first and second internal electrodes 121 and 122, respectively, through the solder layers 141 and 142 may be included.

In the embodiment, the multilayer electronic component 100 may have two external electrodes 131 and 132, but the number of the external electrodes 131 and 132 or the shape thereof may be varied depending on the shape of the internal electrodes 121 and 122 or other purposes.

FIG. 6 is an enlarged diagram illustrating region K1 in FIG. 2. K1 region represents a portion of the first external electrode 131, a portion of the first solder layer 141 and a portion of the first internal electrode 121 in an enlarged manner, and the components of the first external electrode 131 and the components the second external electrode 132 may be similar to each other, other than the difference in which the first external electrode 131 is disposed on the third surface and the second external electrode 132 is disposed on the fourth surface. Thus, the embodiment will be described with respect to the first external electrode 131, and the description includes the description of the second external electrode 132. Also, the solder layers 141 and 142 and the internal electrodes 121 and 122 will also be described with respect to the first solder layer 141 and the first internal electrode 121, and the description may include the description of the second solder layer 142 and the second internal electrode 122.

The solder layers 141 and 142 may be disposed on ends of the internal electrodes 121 and 122 and may include Zn-based solder. The solder layers 141 and 142 may include a first alloy layer 141a disposed on an interfacial surface with the internal electrodes 121 and 122 and including Zn-Ni alloy, and a second alloy layer 141c disposed on the interfacial surface with the external electrodes 131 and 132 and including a Zn-Cu alloy. Accordingly, connectivity between the internal electrode 121 and 122 and the external electrode 131 and 132 may be improved.

The Zn-based solder may have a higher melting point than the Sn-based solder and may be classified as a high-temperature solder, and the melting point of the Zn-based solder may have a melting point of about 300 °C or higher and 400 °C or lower. Accordingly, during the heat treatment according to the formation of the external electrode, Zn may stably form an alloy with Ni and Cu, such that the first and second alloy layers 141a and 141c may be easily formed.

In an embodiment, when a region of the solder layer 141 other than the first and second alloy layers 141a and 141c is defined as the central region 141b, an atomic percentage of Zn in the central region 141b may be higher than an atomic percentage of Zn in the first and second alloy layers 141a and 141c.

A content of Zn of the central region 141b may not be limited to any particular example, and may be, for example, 80 wt% or more.

Also, the central region 141b may further include one or more of Al and Cu. Al may increase the spreading rate of the Zn-based solder, and Cu may increase the melting point of the Zn-based solder.

The Zn-based solder may include, for example, Zn, Al, and Cu. For a more specific example, the Zn-based solder may include Zn: 80-90 wt%, Cu: 0.1-10 wt%, and Al: 0.1-10 wt%.

The first alloy layer 141a may be formed by mutual diffusion of the internal electrode 121 and the solder layer 141, and the second alloy layer 141c may be formed by mutual diffusion of the external electrode 131 and the solder layer 141.

Accordingly, in an embodiment, the atomic percentage of Zn in the first alloy layer 141a may decrease in a direction away from the central region 141b. Also, the atomic percentage of Ni in the first alloy layer 141a may increase in a direction away from the central region 141b.

In an embodiment, the atomic percentage of Zn in the second alloy layer 141c may decrease in a direction away from the central region 141b. Also, the atomic percentage of Cu in the second alloy layer 141c may increase in a direction away from the central region 141b.

The analysis of elements included in the solder layers 141 and 142 may be measured using a scanning electron microscope (SEM) and an energy dispersive spectrometer (EDS) on the first and second direction cross-sections passing through the center in the third direction of the body 110.

Also, the content changes of Zn, Ni and Cu may be analyzed by performing a line profile along a line from the end of the internal electrode 121 to the internal region of the base electrode layer.

For a specific example, an image may be obtained by scanning a cross-section in the first and second directions of the multilayer electronic component 100 cut from the center in the third direction using a scanning electron microscope (SEM) at 20,000X magnification, and a line profile for Zn, Ni and Cu may be performed. In the line profile graph obtained as above, the portion in which the Ni content is almost constant and begins to decrease may be designated as a boundary between the internal electrode 121 and the first alloy layer 141a, the portion in which the content of Zn increases from the boundary between the internal electrode and the first alloy layer and begins to converge to 80 wt% or more may be designated as the boundary between the first alloy layer 141a and the central region 141b, the portion in which the content of Zn converges to 80 wt% or more from the boundary between the first alloy layer and the central region and begins to decrease may be designated as the boundary between the central region 141b and the second alloy layer 141c, and the point at which the content of Zn decreases from the boundary between the central region and the second alloy layer and decreases below 5 wt% may be designated as the boundary between the second alloy layer 141c and the external electrode 131.

In an embodiment, when the average thickness of the first alloy layer 141a is defined as ti1 and the average thickness of the second alloy layer 141c is defined as ti2, 1 um ≤ ti1 ≤ 2 um and 1 um ≤ ti1 ≤ 2 um may be satisfied. When ti1 and ti2 exceed 2 um, radial cracks may occur due to volume expansion of the internal electrode due to excessive mutual diffusion, and when ti1 and ti2 is less than 1 um, the effect of improving electrical connectivity between the internal electrodes 121 and 122 and the external electrodes 131 and 132 may be insufficient.

In an embodiment, when the average thickness of the external electrodes 131 and 132 is defined as ta1 and the average thickness of 141a of the first alloy layer is defined as ti1, 0.02 ≤ ti1/ta1 ≤ 0.1 may be satisfied.

When ti1/ta1 is less than 0.02, moisture resistance reliability may deteriorate, and when ti1/ta1 exceeds 0.1, shorts may occur or cracks may be formed in the body.

The average thickness ta1 of the external electrode, the average thickness ti1 of the first alloy layer, and the average thickness ti2 of the second alloy layer may be measured from the scanned image of the cross-section in the first and second directions of the body 110, scanned by a scanning electron microscope (SEM). The average thickness ta1 of the external electrode may be obtained by averaging the sizes in the second direction of the external electrode measured at five points at an equal distance in the center in the first direction of the body.

The average thickness ti1 of the first alloy layer and the average thickness ti2 of the second alloy layer may be obtained by averaging the values measured at five selected solder layers 141 disposed in the center in the first direction of the body. When it is difficult to distinguish the first alloy layer 141a and the second alloy layer 141c from the central region 141b in the SEM image, the thicknesses of the first alloy layer 141a and the second alloy layer 141c may be measured by performing a line profile with SEM-EDS and measuring the length from the point at which the atomic percentage of Zn begins to decrease below 80 wt% to the point at which the atomic percentage decreases below 5 wt%.

In an embodiment, the body 110 may include grooves G1 and G2 in which ends of internal electrodes 121 and 122 are spaced apart from one surface of the body 110, and the solder layers 141 and 142 may include a first region disposed in the grooves G1 and G2 and a second region protruding to one surface of the body.

The grooves G1 and G2 may be formed by a difference in shrinkage behavior between the internal electrodes 121 and 122 and the dielectric layer 111 during the process of firing the body 110. When the firing shrinkage of the internal electrodes 121 and 122 is greater than that of the dielectric layer 111, connectivity between the internal electrodes 121 and 122 and the external electrodes 131 and 132 may be degraded by the grooves G1 and G2. Generally, to address this issue, a process of removing the protruding dielectric layer using a sandblasting method may be added. Differently from the general method, according to an embodiment, since the solder layers 141 and 142 include a first region disposed in the grooves G1 and G2 and a second region protruding to one surface of the body, connectivity between the internal electrodes 121 and 122 and the external electrodes 131 and 132 may be improved without a polishing process.

In an embodiment, the second region may have a semicircular shape in the first and second direction cross-section of the multilayer electronic component 100. Accordingly, by ensuring the contact area with the external electrodes 131 and 132 to the maximum extent, electrical connectivity may improve.

In an embodiment, when the average thickness of the internal electrode is defined as te, the average thickness of the dielectric layer is defined as td, and the radius of the semicircular shape is defined as tr, te/2 ≤ tr ≤ (te+td)/2 may be satisfied. When the radius tr of the semicircular shape is less than te/2, the effect of improving connectivity between the external electrode and the internal electrode may be insufficient, and when the radius tr exceeds (te+td)/2, the solder layers 141 and 142 may be connected to each other such that the layers may be integrated, which may weaken bonding strength between the external electrode and the body.

In an embodiment, the radius tr of the semicircular shape may be 6 um or less. When the radius tr of the semicircular shape exceeds 6 µm, the adjacent solder layers 141 and 142 may be connected to each other such that the layers may be integrated, which may weaken bonding strength between the external electrode and the body.

The radius tr of the semicircular shape may be measured by scanning the cross-sections in the first and second direction of the body 110 using a scanning electron microscope (SEM) at 10,000x magnification. Also, the radius tr of the semicircular shape may be measured at any five electrode layers 141 and 142 on an interfacial surface, and the average value thereof may be used as the radius tr of the semicircular shape.

In an embodiment, a plurality of the internal electrodes 121 and 122 may be disposed, and the solder layers 141 and 142 disposed on an end of one of the plurality of internal electrodes 121 and 122 may be spaced apart from the solder layers 141 and 142 disposed on an end of the other internal electrode. Accordingly, the base electrode layers 131a and 132a may be in contact with at least a portion of the end of the dielectric layer 111 such that bonding strength between the external electrodes 131 and 132 and the body 110.

The method of forming the solder layers 141 and 142 may not be limited to any particular example. For example, after the body 110 is manufactured through a sintering process, a Zn-based solder may be applied to the exposed surface of the internal electrodes 121 and 122 of the body 110 and a heat treatment may be performed at about 300 °C for about 300 seconds, such that the Zn-based solder may melt and move to the end of the internal electrode. Thereafter, the external electrodes 131 and 132 may be formed, thereby manufacturing the multilayer electronic component 100.

The external electrodes 131 and 132 may be disposed on the body 110.

As illustrated in FIG. 2, the external electrodes 131 and 132 may be disposed on the third and fourth surfaces 3 and 4 of the body 110, respectively, and may include the first and second external electrodes 131 and 132 connected to the first and second internal electrodes 121 and 122, respectively, through the solder layers 141 and 142.

In the embodiment, the multilayer electronic component 100 may have two external electrodes 131 and 132, but the number or shape of the external electrodes 131 and 132 may be varied depending on the shape of the internal electrodes 121 and 122 or other purposes.

The external electrodes 131 and 132 may be formed using any material having electrical conductivity, such as metal, and the specific material may be determined by considering electrical properties and structural stability, and the external electrodes 131 and 132 may have a multilayer structure.

For example, the external electrodes 131 and 132 may include electrode layers 131a and 132a disposed in the body 110 and plating layers 131b and 132b formed on the electrode layers 131a and 132a.

In an embodiment, the external electrodes 131 and 132 may include electrode layers 131a and 132a in contact with at least a portion of an end of a dielectric layer 111 disposed between the internal electrodes 121 and 122 and covering the solder layers 141 and 142. Accordingly, bonding strength between the external electrode 131 and 132 and the body 110 may be improved, and electrical connectivity between the internal electrode 121 and 122 and the external electrode 131 and 132 may be improved.

In an embodiment, the electrode layers 131a and 132a may include Cu and glass, and the internal electrode 121 and 122 may include Ni. Since the solder layers 141 and 142 include Zn-based solder, the shape may be maintained even at the firing temperature, thereby improving electrical connectivity between the internal electrode 121 and 122 and the external electrode 131 and 132. Also, since the electrode layers 131a and 132a include Cu, the second alloy layer 141c may be easily formed, and since the internal electrode 121 and 122 includes Ni, the first alloy layer 141a may be easily formed.

In an embodiment, the electrode layers 131a and 132a may include Cu and resin, and the internal electrodes 121 and 122 may include Ni. Since the electrode layers 131a and 132a include Cu, the second alloy layer 141c may be easily formed, and since the internal electrodes 121 and 122 include Ni, the first alloy layer 141a may be easily formed.

Also, in the electrode layers 131a and 132a, a firing electrode and a resin-based electrode may be formed in order on the body. Also, the electrode layers 131a and 132a may be formed by transferring a sheet including a conductive metal to the body, or may be formed by transferring a sheet including a conductive metal to the firing electrode.

A material having excellent electrical conductivity may be used as the conductive metal included in the electrode layers 131a and 132a, and the material is not limited to any particular example. For example, the conductive metal may be one or more of nickel (Ni), copper (Cu), and alloys thereof.

The plating layers 131b and 132b may improve mounting properties. The types of the plating layers 131b and 132b are not limited to any particular example, and the plating layers 131b and 132b may be plating layers including one or more of Ni, Sn, Pd, and alloys thereof, and may be formed as a plurality of layers.

For a more specific example of the plating layers 131b and 132b, the plating layers 131b and 132b may be Ni plating layers or Sn plating layers, and Ni plating layers and Sn plating layers may be formed in order on the electrode layers 131a and 132a, or Sn plating layers, Ni plating layers, and Sn plating layers may be formed in order thereon. Also, the plating layers 131b and 132b may include a plurality of Ni plating layers and/or a plurality of Sn plating layers.

### (Embodiment)

To verify the effect according to the ratio ti1/ta1 of the average thickness ti1 of the first alloy layer to the average thickness ta1 of the external electrode, sample chips of test Nos. 1 to 6 in which the ratio ti1/ta1 of the average thickness ti1 of the first alloy layer to the average thickness ta1 of the external electrode satisfied the values described in Table 1 below were prepared.

Capacitances of the sample chips of test Nos. 1 to 6 was compared with each other, occurrence of moisture resistance reliability and cracks were evaluated, and the results are listed in Table 1 below.

The capacitance are relative values based on capacitance of test No. 5 as a reference value 100%.

As for moisture resistance reliability, 40 sample chips were prepared for each test No., a voltage equivalent to 1.0 times the rated voltage was applied for 100 hours at a temperature of 85 °C and a humidity of 85%, and sample chips of which insulation resistance decrease below 10 kΩ were determined as defective. The number of chips determined as defective was listed.

The occurrence of cracks was confirmed by observing the cross-sections in the first and second directions cut from the center in the third direction of the sample chip.

**[Table 1]**

| Test No. | ti1/ta1 | Capacitance | Moisture resistance reliability | Cracks |
|---|---|---|---|---|
| 1 | 0.005 | 75% | 3/40 | X |
| 2 | 0.016 | 88% | 1/40 | X |
| 3 | 0.024 | 94% | 0/40 | X |
| 4 | 0.057 | 97.5% | 0/40 | X |
| 5 | 0.082 | 100% | 0/40 | X |
| 6 | 0.121 | - (short occurred) | - | ○ |

Test No. 3 to 5 satisfying 0.02 ≤ ti1/ta1 ≤ 0.1 had excellent capacitance and moisture resistance reliability, and no cracks occurred.

Test No. 1 and 2 in which ti1/ta1 was less than 0.02 had poor moisture resistance reliability.

Also, in test No. 6 in which ti1/ta1 exceeded 0.1, cracks occurred in the body and shorts occurred.

According to the aforementioned embodiments, reliability of a multilayer electronic component may improve.

Also, contact between the internal electrode and the external electrode may improve.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The above suggested embodiments may be implemented do not exclude the possibilities of combination with features of other embodiments. For example, even though the features described in an embodiment are not described in the other embodiment, the description may be understood as relevant to the other embodiment unless otherwise indicated.

An expression used in the singular encompasses the expression of the plural, unless it has a clearly different meaning in the context.

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including an internal electrode disposed in a length-width plane;
a solder layer including a Zn-based solder disposed on an edge of the internal electrode ; and
an external electrode disposed on the solder layer,
wherein the solder layer includes a first alloy layer including Zn-Ni alloy disposed on an interfacial surface with the internal electrode, and a second alloy layer including Zn-Cu alloy disposed on an interfacial surface with the external electrode.

2. The multilayer electronic component of claim 1, wherein, when a region of the solder layer other than the first and second alloy layers is defined as a central region, an atomic percentage of Zn of the central region is higher than an atomic percentage of Zn of the first and second alloy layers.

3. The multilayer electronic component of claim 2, wherein an atomic percentage of Zn in the first alloy layer decreases in a direction away from the central region.

4. The multilayer electronic component of claim 2, wherein an atomic percentage of Zn in the second alloy layer decreases in a direction away from the central region.

5. The multilayer electronic component of claim 2, wherein the central region includes one or more of Al and Cu.

6. The multilayer electronic component of claim 1, wherein, when an average thickness of the first alloy layer is defined as ti1 and an average thickness of the second alloy layer is defined as ti2, 1 um ≤ ti1 ≤ 2 um and 1 um ≤ ti1 ≤ 2 um are satisfied.

7. The multilayer electronic component of claim 1, wherein, when an average thickness of the external electrode is defined as ta1 and an average thickness of the first alloy layer is defined as ti1, 0.02 ≤ ti1/ta1 ≤ 0.1 is satisfied.

8. The multilayer electronic component of claim 1, further comprising additional internal electrodes with dielectric layers interposed therebetween, wherein the external electrode includes a base electrode layer in contact with at least a portion of an end of the dielectric layers and disposed to cover the solder layer.

9. The multilayer electronic component of claim 8, wherein the base electrode layer includes Cu and glass, and the internal electrode includes Ni.

10. The multilayer electronic component of claim 8, wherein the base electrode layer includes Cu and resin, and the internal electrode includes Ni.

11. The multilayer electronic component of claim 1,
wherein the body includes a groove in which an end of the internal electrode is spaced apart from one surface of the body, and
wherein the solder layer includes a first region disposed in the groove and a second region protruding to the one surface of the body.

12. The multilayer electronic component of claim 11,
wherein the internal electrode is disposed alternately with a dielectric layer in the first direction, and the body includes first and second surfaces opposing each other in the first direction, third and fourth surfaces connected to the first and second surfaces and connected to each other in a second direction, and fifth and sixth surfaces connected to the first to fourth surfaces and opposing each other in a third direction, and
wherein in a cross-section in the first and second directions of the multilayer electronic component, the second region has a semicircular shape.

13. The multilayer electronic component of claim 12, wherein, when an average thickness of the internal electrode is defined as te, an average thickness of the dielectric layer is defined as td, and a radius of the semicircular shape is defined as tr, te/2 ≤ tr ≤ (te+td)/2 is satisfied.

14. The multilayer electronic component of claim 13, wherein, when a radius of the semicircular shape is defined as tr, tr is 6 um or less.

15. The multilayer electronic component of claim 13, wherein a plurality of internal electrodes are disposed, and a solder layer disposed on an end of one of the plurality of internal electrodes is spaced apart from a solder layer disposed on an end of the other internal electrode.
